# EUROPÄISCHE PATENTSCHRIFT

(11) **EP 0 783 415 B1**
(45) Veröffentlichungstag und Bekanntmachung des Hinweises auf die Patenterteilung: **18.07.2001**
(21) Anmeldenummer: 96917485.3
(22) Anmeldetag: 31.05.1996
(51) Int. Cl.: B60G 21/055, B60G 9/02

(54) **ACHSAUFHÄNGUNG FÜR STARRACHSEN IN FAHRZEUGEN**
AXLE SUSPENSION SYSTEM FOR RIGID AXLES ON VEHICLES
SYSTEME DE SUSPENSION D'ESSIEU DESTINE AUX ESSIEUX RIGIDES DE VEHICULES

(30) Priorität: 16.06.1995 DE 19521875
(43) Veröffentlichungstag der Anmeldung: 16.07.1997
(60) Teilanmeldung: 99112396.9
(73) Patentinhaber: ZF Lemförder Metallwaren AG, 49448 Lemförde (DE)
(72) Erfinder: BUHL, Reinhard, D-49163 Bohmte (DE)
(86) Internationale Anmeldenummer: EP9602365
(87) Internationale Veröffentlichungsnummer: WO9700177

(56) Entgegenhaltungen:
- DE-A- 2 934 295
- DE-A- 3 119 810
- DE-A- 4 021 157
- DE-A- 4 338 651
- DE-C- 928 813
- DE-C- 3 737 735
- DE-C- 4 307 639
- PATENT ABSTRACTS OF JAPAN vol. 016, no. 576 (M-1345), 16.Dezember 1992 & JP,A,04 224413 (NISSAN MOTOR CO LTD), 13.August 1992,

## Beschreibung

Die Erfindung bezieht sich auf eine Achsaufhängung für Starrachsen in Fahrzeugen, insbesondere Nutzkraftfahrzeugen, nach dem Oberbegriff des Patentanspruches 1.

Bekannt sind Achsaufhängungen aus einer Achsführung durch an beiden Fahrzeugseiten angeordnete Längslenker, die einerseits an der Fahrzeugachse und andererseits an dem Fahrzeugaufbau angelenkt sind, in Verbindung mit einem einerseits in der Fahrzeugmitte mit einem Zentralgelenk meistens an der Fahrzeugachse verankerten und mit den Enden seiner beiden Streben andererseits am Fahrzeugaufbau angelenkten Dreieckslenker und aus einem in der Draufsicht meist u-förmigen Stabilisatorstab, dessen abgewinkelte Schenkelenden mit einem seitlichen Abstand voneinander an den Fahrzeugaufbauten begrenzt universalgelenkig befestigt sind und dessen Stegteil in wenigstens zwei Stabilisatorlagern an der Fahrzeugachse um eine Querachse zur Fahrzeuglängsrichtung beweglich gelagert ist.

Aus der DE 43 38 651 A1 ist eine Aufhängung für eine Starrachse eines Fahrzeuges mit einem Achskörper mit auf jeder Radseite einem Paar übereinanderliegender jeweils mit dem Fahrzeugoberbau gelenkig verbundener seitlicher Lenkerpaare, einer Querführung, einem Seitenneigungsstabilisator sowie einer Schrauben- oder Luftfeder-Abstützung gegenüber dem Fahrzeugoberbau bekannt, bei der die Funktion der Querführung in ein Lenkerdreieck gelegt ist, wozu aus den beiden Lenkerpaaren mit jeweils einem oberen und einem unteren Lenker, von denen jeweils einer längs und einer schräg zur Fahrzeuglängsachse verläuft, jeweils ein Schräg-Lenker Bestandteil eines solchen Lenkerdreieckes ist, und daß der Seitenneigungsstabilisator eine - in gleicher Höhe quer gegenüberliegende Schräg- bzw. Längs-Lenker in einem ihrer jeweiligen Lagerbereiche starr miteinander verbindende -Torsionsfeder ist.

Weiterhin ist aus DE 40 21 157 A1 eine Einzelradaufhängung für Kraftfahrzeuge mit einander gegenüberliegenden radführenden Lenkern, mit schräg zur Fahrzeuglängsachse verlaufenden, aufbauseitigen Schwenkachsen sowie mit einem quer zur Fahrzeuglängsachse freihängend angeordneten Drehstabstabilisator bekannt, dessen beiden Enden, vorzugsweise unter Zwischenschaltung gummielastischer Elemente, derart an die radführenden Lenker angekoppelt sind, daß der Drehstabstabilisator bei nicht gleichsinnigem und nicht gleichgroßem Ein- bzw. Ausfedern der Räder um seine Längsachse tordiert wird, wobei der Drehstabstabilisator schenkellos, d. h. ohne abgewinkelte Arme, ausgebildet ist, seine beiden Enden mit den ihnen benachbarten radführenden Lenkern jeweils über nur eine Lageranordnung gekoppelt sind, und die Lageranordnungen als winkelausgleichende und drehmomentenübertragende Lager ausgebildet sind.

Der Erfindung liegt die Aufgabe einer einfacheren, raum- und kostensparenden Gestaltung einer solchen Achsaufhängung zugrunde.

Gelöst wird diese Aufgabe bei einer Achsführung nach dem Oberbegriff durch Ausbildungsmerkmale nach dem Patentanspruch 1.

Erreicht wird durch diese Ausbildungsmerkmale eine Integration der Elemente zur Achsführung und der Elemente zur Querstabilisierung des Fahrzeugaufbaus gegenüber der Fahrzeugachse. Der Stabilisatorstab ist unmittelbar zwischen den Längslenkern für die Achsführung angeordnet und mit diesen Längslenkern durch an sich bekannte, reibungsarme Lagerelemente drehfest, quer zur Fahrzeuglängsrichtung jedoch kardanisch beweglich, verbunden. Ein besonderer Vorteil der erfindungsgemäßen Ausbildung liegt in der Möglichkeit der Substitution bereits eingebauter Achsführungselemente durch eine erfindungsgemäß ausgebildete Achsaufhängung unter Verwendung der am Fahrzeugaufbau und an der Fahrzeugachse vorhandenen Lagerelemente.

Gesonderter Bauraum für die Lagerung eines Stabilisatorstabes ist nicht mehr erforderlich. Es entfallen Lagerelemente für den Stabilisatorstab an der Fahrzeugachse und auch an dem Fahrzeugaufbau. Damit einhergehend ist die erfindungsgemäße Achsaufhängung gegenüber bekannten Ausbildungen kostensparend, weil sie weniger Einzelteile aufweist und weniger Montagearbeit erfordert. Es ergeben sich aber auch Funktionsvorteile. Der Stabilisatorstab kann als gerader Stab zum Einsatz kommen, so daß sich auch seine Herstellung verbilligt. Die Enden des als Drehstab ausgebildeten Stabilisatorstabes werden jeweils an wenigstens zwei Stellen mit den Längslenkern, gegenüber der Fahrzeuglängsrichtung jedoch beweglich, verbunden, so daß einerseits eine drehfeste Verbindung des Stabilisatorstabes mit dem Längslenker erreicht wird, die aber andererseits in Querrichtung des Fahrzeuges ausreichend beweglich gestaltet werden kann. Die Anordnung des Stabilisatorstabes zwischen den Längslenkern für die Achsführung kann an beliebiger Stelle zwischen den Anlenkungen der Längslenker an der Fahrzeugachse und den Anlenkungen der Längslenker am Fahrzeugaufbau erfolgen. Möglich ist aber auch eine Kombination der Verbindung des Stabilisatorstabes mit den Längslenkern für die Achsführung mit deren Lagern an der Fahrzeugachse.

In der Zeichnung sind Ausführungsbeispiele teils schematisch dargestellt. Es zeigen:
- Figur 1: eine Draufsicht auf ein Ausführungsbeispiel der Erfindung,
- Figur 2: eine Seitenansicht der Anordnung nach Figur 1,
- Figur 3: eine Draufsicht auf ein anderes nicht beanspruchtes Ausführungsbeispiel und
- Figur 4: eine Seitenansicht der Anordnung nach Figur 3.

Bei den in der Zeichnung dargestellten Ausführungsbeispielen ist die Fahrzeugachse 1 an beiden Fahrzeugseiten mit einem erheblichen Abstand von der Längsmitte des Fahrzeuges durch Längslenker 2 und 3 und in der Fahrzeugmitte durch einen in der Höhenlage versetzt angeordneten Dreieckslenker 4 mit dem in der Zeichnung aus Gründen der besseren Übersicht nicht dargestellten Fahrzeugaufbau verbunden. Die Gelenkverbindungen der Längslenker 2 und 3 einerseits mit der Starrachse 1 und andererseits mit dem Fahrzeugaufbau sowie die Anlenkungen der freien Enden der beiden Streben des Dreieckslenkers 4 sind kardanisch ausgeführt, um Verwindungen der Fahrzeugachse 1 gegenüber dem Fahrzeugaufbau zu ermöglichen. Der Dreieckslenker 4 ist mit dem Zentralgelenk 5 mittig auf der Fahrzeugachse 1 verankert.

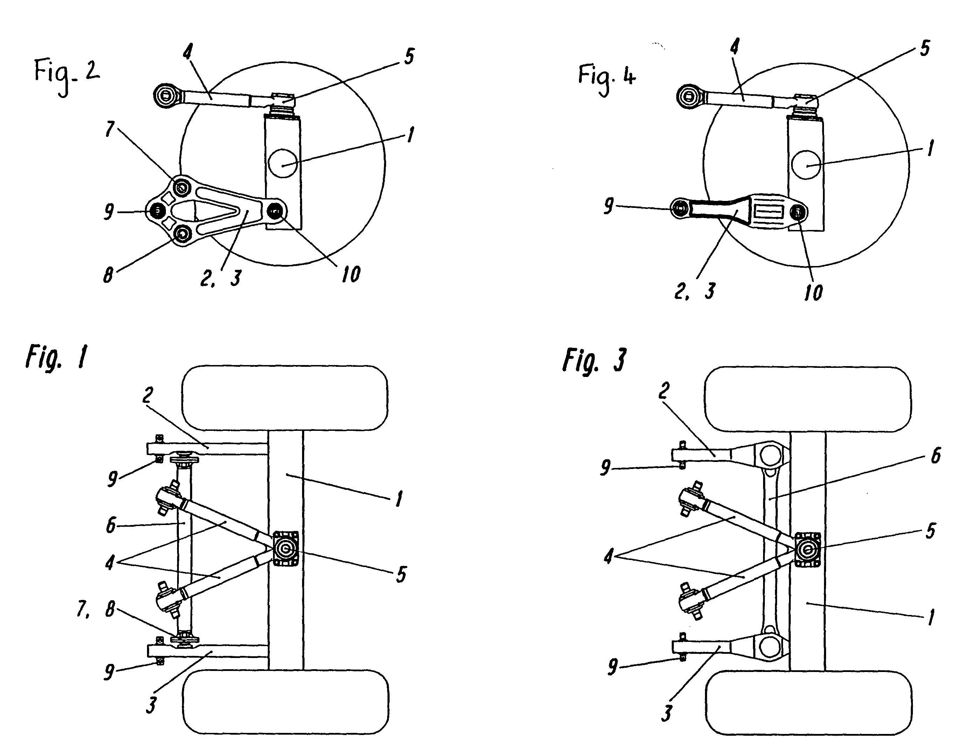

Bei dem Ausführungsbeispiel in den Figuren 1 und 2 ist ein Stabilisatorstab 6 zwischen den Längslenkern 2 und 3 angeordnet und mit seinen Enden jeweils mit einem der beiden Längslenker 2 und 3 drehfest, jedoch in Längsrichtung des Fahrzeugs begrenzt beweglich, verbunden. Erreicht wird dies bei der Anordnung nach dem Beispiel in den Figuren 1 und 2 durch eine Anbindung des Stabilisatorstabendes an den Längslenker an zwei einen Abstand voneinander aufweisenden Stellen 7 und 8, wobei diese Anbindung kardanisch beweglich ist, um Ausgleichsbewegungen zu ermöglichen. Zur Anlenkung werden als Radialgelenke ausgebildete Kugelgelenke verwendet. Dargestellt ist in diesem Ausführungsbeispiel die Anordnung des Stabilisatorstabes 6 und seine Verbindung mit den Längslenkern 2 und 3 in Nähe der Anlenkung 9 der beiden Längslenker 2 und 3 an dem nicht dargestellten Fahrzeugaufbau.

Das Ausführungsbeispiel in den Figuren 3 und 4 zeigt eine Version, bei der der Stabilisatorstab 6 in Nähe der Anlenkungen 10 der anderen Enden der Längslenker 2 und 3 an die Fahrzeugachse 1 angeordnet ist.

## Patentansprüche

1. Achsaufhängung für Starrachsen in Fahrzeugen, insbesondere Nutzfahrzeugen, bei der auf jeder Fahrzeugseite etwa auf gleicher Höhe wenigstens ein sich in Fahrzeuglängsrichtung erstreckender, die Fahrzeugachse (1) mit dem Fahrzeugaufbau vertikal beweglich verbindender Längslenker (2, 3) und davon in der Höhe abweichend ein einerseits mittig an der Fahrzeugachse und andererseits seitlich versetzt an dem Fahrzeugaufbau angelenkter Dreieckslenker (4) sowie ein Stabilisatorstab (6) als ein seitlichen Kippbewegungen durch Torsionsspannungen entgegenwirkender Drehfederstab vorgesehen sind, wobei der Stabilisatorstab (6) unmittelbar zwischen den Längslenkern (2,3) angeordnet ist und seine Enden universalgelenkig, jedoch drehfest, mit den Längslenkern (2,3) verbunden sind,
dadurch gekennzeichnet, daß
die Verbindung zwischen den Enden des Stabilisatorstabes (6) und den Längslenkern (2 bzw. 3) an jedem der beiden Längslenker (2 und 3) jeweils an zwei einen Abstand zueinander aufweisenden Stellen (7, 8) durch als Radialgelenke ausgebildete Kugelgelenke erfolgt.

2. Achsaufhängung nach Anspruch 1,
dadurch gekennzeichnet, daß
die Enden des Stabilisatorstabes (6) in der Nähe je einer Anlenkung (9) der Längslenker (2 und 3) an dem Fahrzeugaufbau mit den Längslenkern verbunden sind.

## Claims

1. Axle suspension for rigid axles in vehicles, particularly utility vehicles, in which there are provided, on each side of the vehicle at approximately the same height, at least one longitudinal link (2, 3) which extends in the longitudinal direction of the vehicle and connects the vehicle axle (1) to the vehicle body in a vertically movable manner and, in a manner differing from the said links in height, a triangular link (4) which is articulated, on the one hand, centrally on the vehicle axle and, on the other hand, in a laterally offset manner on the vehicle body, and also a stabiliser bar (6) in the form of a torsion-spring bar which counteracts lateral tilting movements by torsional stresses, the said stabiliser bar (6) being disposed directly between the longitudinal links (2, 3) and its ends being connected to the said longitudinal links (2, 3) in a universally articulated but torsion-proof manner,
characterised in that
the connection between the ends of the stabiliser bar (6) and the longitudinal links (2 and 3 respectively) at each of the two longitudinal links (2 and 3) is effected, in each case, at two points (7, 8) which are. at a distance from one another, by ball joints constructed as radial joints.

2. Axle suspension according to claim 1,
characterised in that
the ends of the stabiliser bar (6) are connected to the longitudinal links in the vicinity of an articulation (9), in each case, of the said longitudinal links (2 and 3) on the vehicle body.

## Revendications

1. Suspension pour essieux rigides de véhicules à moteur, en particulier de véhicules utilitaires, dans laquelle il est prévu, sur chaque côté du véhicule, plus ou moins à la même hauteur, au moins une bielle longitudinale (2, 3) s'étendant dans la direction longitudinale du véhicule, raccordant en déplacement vertical, l'essieu (1) du véhicule à la carrosserie du véhicule et, de là, à une hauteur différente, une bielle triangulaire (4) articulée, d'une part, au centre sur l'essieu du véhicule et, d'autre part, avec un décalage latéral, sur la carrosserie du véhicule, ainsi qu'une barre stabilisatrice (6) sous forme d'une barre de torsion allant à l'encontre des basculements latéraux par des efforts de torsion, la barre stabilisatrice (6) étant agencée directement entre les bielles longitudinales (2, 3) et ses extrémités étant reliées par une articulation universelle, mais sans pouvoir tourner, aux bielles longitudinales (2, 3), caractérisée en ce que la liaison entre les extrémités de la barre stabilisatrice (6) et les bielles longitudinales (2 ou 3) se fait sur chacune des deux bielles longitudinales (2 et 3), respectivement en deux endroits (7, 8) à distance l'un de l'autre, par des articulations sphériques se présentant sous la forme d'articulations radiales.

2. Suspension d'essieu selon la revendication 1, caractérisée en ce que les extrémités de la barre stabilisatrice (6) sont reliées aux bielles longitudinales respectivement au voisinage d'une articulation (9) de la bielle longitudinale (2 et 3) sur la carrosserie du véhicule.
